# EUROPEAN PATENT SPECIFICATION

(11) **EP 0 943 533 B1**
(45) Date of publication and mention of the grant of the patent: **05.10.2005**
(21) Application number: 99850030.0
(22) Date of filing: 03.03.1999
(51) Int. Cl.: B62D 55/108, B60G 11/60, B60G 21/055

(54) **Wheel suspension system for tracked vehicles**
Radaufhängungssystem für Raupenfahrzeuge
Système de suspension de roue pour véhicules à chenilles

(30) Priority: 19.03.1998 SE 9800922
(43) Date of publication of application: 22.09.1999
(73) Proprietor: Land Systems Hägglunds Aktiebolag, 891 82 Örnsköldsvik (SE)
(72) Inventor: Falk, Alfons, 891 78 Bonässund (SE)
(74) Representative: Winblad, Hans Peter

(56) References cited:
- EP-A- 0 097 540
- DE-C- 688 421
- DE-C- 928 449
- DE-C- 968 975
- GB-A- 532 393
- GB-A- 554 695
- US-A- 2 270 572
- US-A- 3 504 931
- US-A- 3 724 587
- US-A- 3 778 082
- PATENT ABSTRACTS OF JAPAN vol. 010, no. 029 (M-451), 5 February 1986 (1986-02-05) & JP 60 184735 A (HINO JIDOSHA KOGYO KK), 20 September 1985 (1985-09-20)

## Description

The present invention relates to a suspension system for a tracked vehicle according to the preamble of claim 1, as known from DE-C-968975.

In the known suspension system of this type, the torsion bar alone takes up the entire suspension movement of the pendulum arms, which results in above all a limited possible angular capacity of the suspension system.

A primary object of the present invention is to develop the abovementioned known suspension system in order to prevent overtwisting of the torsion bar in extreme cases.

According to the invention there is provided a suspension system with the features of claim 1; thus in particular complementary engagement members are arranged on the outside of the bearing sleeve of the pendulum arms and on the inside of the end portion surrounding this of the tubular element, which members are designed to allow a predetermined, limited free rotation movement of the bearing sleeve relative to the end portion of the tubular element and, in the event of this free relative rotation movement being exceeded, to be brought into engagement with one another, the pendulum arm short-circuiting the torque force directly to the rubber bushing.

Further features of the suspension system according to the invention are defined in the patent claims which follow and are described in greater detail below with reference to the appended drawings, in which:
Fig. 1 is a perspective view of a support wheel mounting for a tracked vehicle with a suspension system according to the present invention;
Fig. 2 is a sectioned side view of a part of a pendulum arm mounting in one side of a tracked vehicle body, which shows torsion elements coupled in series according to the invention;
Fig. 3 shows in perspective view an outer bushing sleeve of the rubber bushing which is anchored on an end portion of a torque-transmitting tubular element;
Fig. 4 shows an anchoring ring for preventing rotation of the outer sleeve of the rubber bushing;
Fig. 5 shows a pendulum arm in perspective with engagement members on the outside of its bearing sleeve part, and
Fig. 6 is a diagrammatic cross-sectional view along the line VI-VI in Fig. 2 but with the support sleeve omitted.

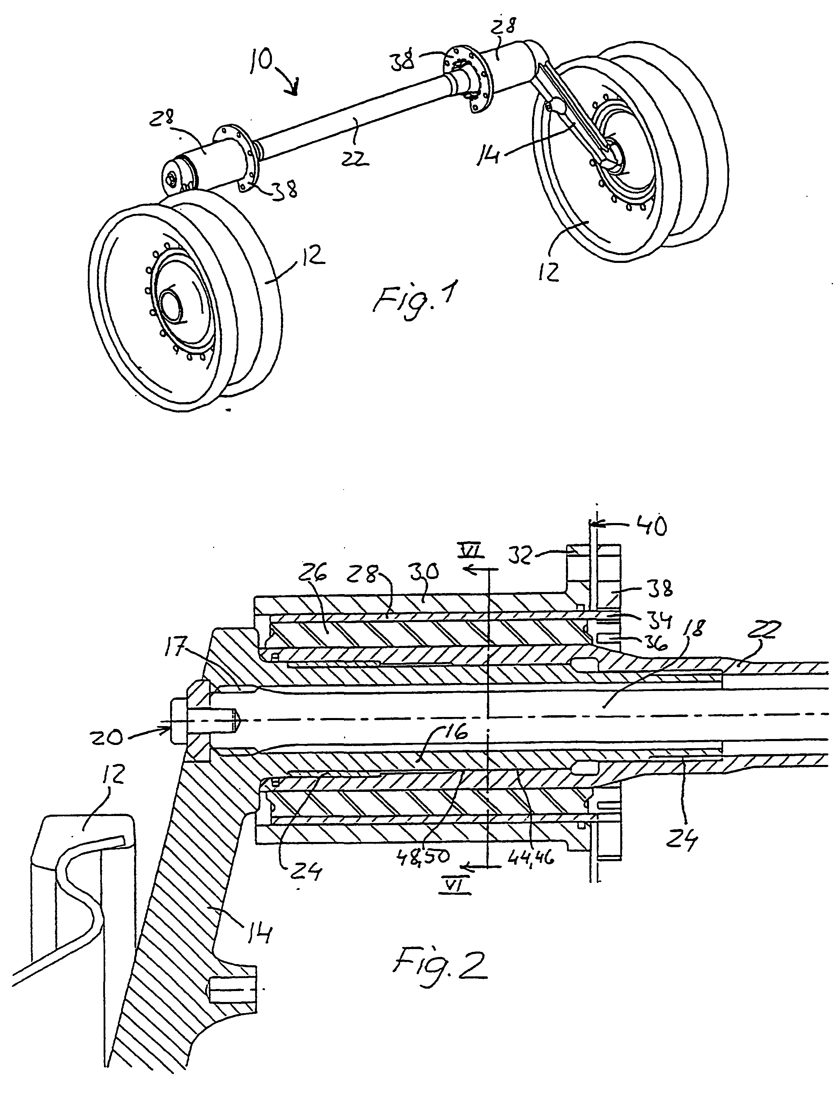

In Fig. 1, 10 designates generally a wheel mounting for a pair of support wheels 12 for a tracked vehicle (not shown), the wheel mounting 10 comprising a suspension system according to the present invention. A tracked vehicle usually comprises a number of support wheel mountings 10 positioned one following another along the vehicle, the support wheels 12 on each side of the vehicle bearing against the inside of the lower strand of a respective endless drive track. Each wheel mounting 10 comprises a pendulum arm 14 for each support wheel 12, the latter being rotatably mounted at one (the outer) end of the pendulum arm 14. As shown in Fig. 2, the inner end of each pendulum arm 14 has an axially inwardly directed bearing sleeve 16 and is firmly connected, by means of a splined joint 17 and a screw joint 20, to a respective end of a first spring element in the form of a torsion bar 18. The torsion bar 18 therefore extends across the longitudinal extent of the vehicle and interconnects the pendulum arms 14. A central portion (not shown) of the torsion bar 18 is connected in a rotationally fixed manner via a splined joint to a torque-transmitting tubular element 22 which surrounds the torsion bar 18 and the end portions of which surround the bearing sleeves 16 of the pendulum arms 14. The bearing sleeves 16 are mounted on the inside of the tube ends via a pair of sliding bearings 24.

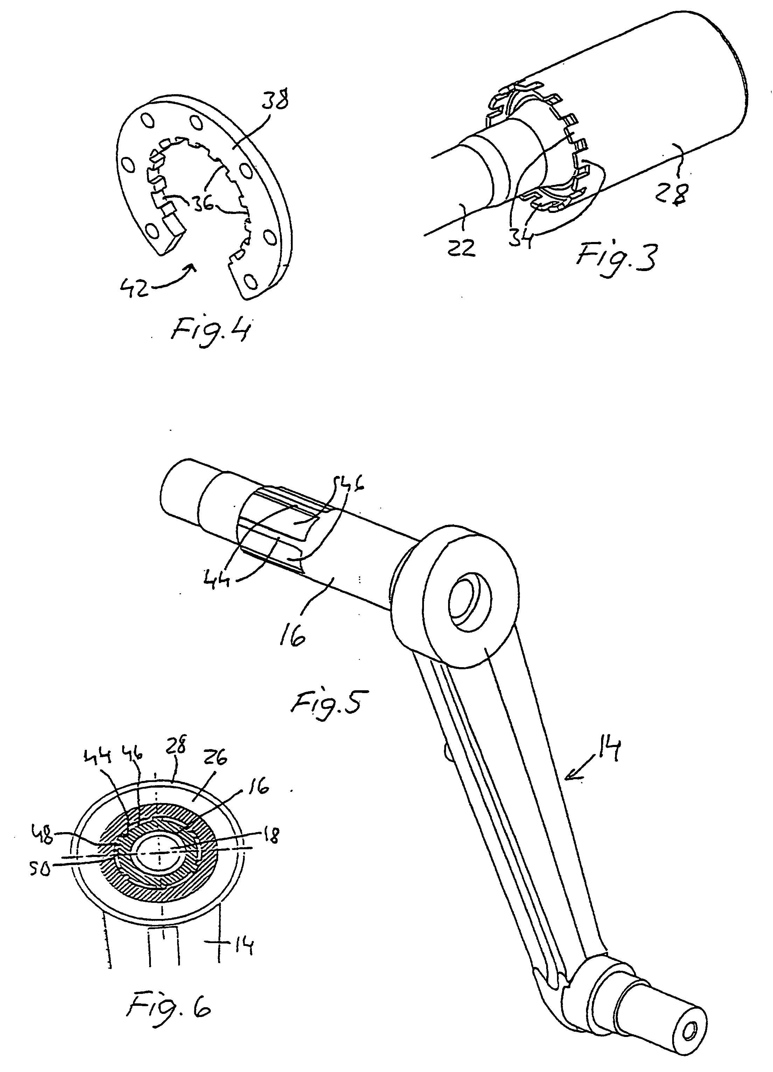

A second torsion element in the form of a rubber bushing 26 is vulcanized firmly on the outside of each end portion of the tubular element 22. An outer bushing sleeve 28 is vulcanized firmly on the outside of the rubber bushing 26 and is supported in a support sleeve 30 with an anchoring flange 32 for fastening the entire wheel mounting 10 in the two opposite sides of the tracked vehicle. The outer bushing sleeve 28 is provided with rotation-preventing engagement members in the form of teeth or tongues 34 on one end edge (Fig. 3), which are arranged so as to engage with recesses 36 in an anchoring ring 38 (Fig. 4) which is to be mounted firmly against the inside of a side wall 40 of the vehicle body (Fig. 2) by means of bolted joints (not shown) which connect the fastening flange 32 to the anchoring ring 38. The anchoring ring 38 may be split or have a recess 42 (Fig. 4) so as to make possible slipping-on over the tubular element 22 before installation of the wheel mounting 10 in the vehicle.

In the suspension system according to the invention described above, two torsion springs (the torsion bar 18 and the rubber bushing 26) are therefore coupled in series with one another, the torsion bar 18 and the rubber bushing 26 being designed so as each to take up roughly half the twisting that is caused by the pendulum arms 14 during normal deflection movements (upward deflection). In order to prevent excessive twisting of the torsion bar 18 occurring in the event of, for example, a forceful deflection movement of the pendulum arms 14, engagement members are arranged - in a portion between the axially separate sliding bearings 24 - between the bearing sleeve 16 of the pendulum arm 14 and the respective end portion of the tubular element 22, which members are designed to allow a predetermined, limited free rotation movement of the bearing sleeve 16 relative to the end portion of the tubular element 22 and, in the event of this free relative rotation movement of the bearing sleeve 16 being exceeded, to be brought into engagement with one another so as thus to "short-circuit" the torque transmission from the pendulum arm 14 directly to the rubber bushing 26 which then takes up all the excess torque. As shown in Figs 5 and 6, these engagement members can take the form of a number of axial ribs 44 which are separate in the circumferential direction and formed between wide grooves 46 on the outside of the bearing sleeve 16 and of corresponding axial, inwardly projecting ribs 48 formed between wide grooves 50 on the inside of the end portions of the tubular element 22 (Fig. 6), the ribs 44 on the bearing sleeve 16 being capable of freely moving an angular distance corresponding to the distance between two opposite radial side surfaces of two adjacent ribs 48 on the tube ends before the ribs 44 come into contact with the ribs 48 and transmit the excess torque to the rubber bushing 26.

In the suspension system according to the invention, the tubular element 22 therefore connects the two rubber bushings 26 on the left and the right side of the tracked vehicle. In the event that the support wheels do not deflect at the same time, a corresponding blocking of the twisting of the torsion bar 18 can take place on one side, in which case it is possible for excess torque from one support wheel to be distributed to both rubber bushings 26 via the torque-transmitting tubular element 22, the characteristic torsion (1-2°) of which is negligible in this connection.

The suspension system according to the invention provides a very great angular capacity at the same time as it makes possible symmetry of the track sets of the vehicle and very low transmission of bending moment to the side of the vehicle. The rubber bushings eliminate any minor errors of geometry and provide a certain degree of vibration insulation.

## Claims

1. Suspension system for a tracked vehicle of the type comprising support wheels (12) arranged along opposite sides of the vehicle for bearing against the inside of a respective endless drive track, where the support wheels (12) are rotatably mounted at an outer end of a respective pendulum arm (14) which, at its inner end, is limitedly pivotably mounted in the side of the vehicle body, and where the pendulum arms (14) for each pair of opposite support wheels (12) are interconnected by means of a first suspension element (18) in the form of a torsion bar which extends across the longitudinal extent of the vehicle and coaxially with the pivoting axis of the pendulum arms (14), a central portion of the torsion bar (18) being connected in a rotationally fixed manner to a surrounding, elongate tubular element (22), one end portion of which coaxially surrounds and supports a bearing sleeve (16) connected to one pendulum arm (14) and the other end portion of which coaxially surrounds and supports a bearing sleeve (16) connected to the other, opposite pendulum arm (14), a rubber bushing being mounted on the outside of each end portion of the tubular element (22) and which torsion element in turn is surrounded by and firmly connected to an outer bushing sleeve (28) designed to be fixed firmly in the side of the vehicle body, **characterized in that** each rubber bushing is mounted firmly on the tubular element (22) to form a second torsion element (26) and **in that** complementary engagement members (44, 48; 46, 50) are arranged on the outside of the bearing sleeve (16) of the pendulum arms (14) and on the inside of the end portion surrounding this of the tubular element (22), which members are designed to allow a predetermined, limited free rotation movement of the bearing sleeve (16) relative to the end portion of the tubular element (22) and, in the event of this free relative rotation movement being exceeded, to be brought into engagement with one another to prevent overtwisting of the torsion bar (18).

2. Suspension system according to Claim 1, **characterized in that** the engagement members comprise, in one part, axial grooves (46, 50) and, in the other part, ribs (44, 48) engaging in these grooves, the ribs (44, 48) having a smaller width than the grooves (46, 50).

3. Suspension system according to Claim 1 or 2, **characterized in that** the torsion bar (18) is connected in a rotationally fixed manner to the central portion of the tubular element (22) via a splined joint.

4. Suspension system according to any one of Claims 1-3, **characterized in that** each outer bushing sleeve (28) is supported by a support sleeve (30) with a fastening flange (32) for fixing the entire support wheel mounting (10) in associated stays (38) in the sides of the vehicle body.

5. Suspension system according to Claim 4, **characterized in that** each outer bushing sleeve (28) has a number of axially directed tongues (34) for rotation-preventing locking engagement with corresponding recesses (36) in the stay (38) or vice versa.

6. Suspension system according to any one of Claims 1-5, **characterized in that** the bearing sleeves (16) of the pendulum arms (14) are mounted in the end portions of the tubular element (22) via sliding bearings (24).

7. Suspension system according to any one of Claims 1-6, **characterized in that** the rubber bushings (26) are vulcanized firmly on the end portions of the tubular element (22) and in the outer sleeves (28).

8. Suspension system according to any one of Claims 1-7, **characterized in that** the rubber bushings (26) for each support wheel pair and the torsion bar (18) are dimensioned so as each to take up roughly half the relevant twisting.

9. Suspension system according to any one of Claims 1-8, **characterized in that** the two rubber bushings (26) for each support wheel pair are designed to be mounted on the outside of the respective vehicle body side (40).

## Patentansprüche

1. Aufhängungssystem für ein Raupenfahrzeug der Bauart, die Stützräder (12) aufweist, die entlang gegenüberliegender Seiten des Fahrzeuges zur Anlage gegen jeweils die Innenseite einer endlosen Antriebskette angeordnet sind, wobei die Stützräder (12) drehbar an einem äußeren Ende jeweils eines Pendelarmes (14) angebracht sind, der an seinem inneren Ende, in der Seite des Fahrzeugkörpers, begrenzt schwenkbar angebracht ist, und wobei die Pendelarme (14), für jedes Paar einander gegenüberliegender Stützräder (12) mittels eines ersten Aufhängungselementes (18) in Form eines Torsionsstabs miteinander verbunden sind, der sich quer zur Längserstreckung des Fahrzeuges und koaxial zu den Schwenkachsen der Pendelarme (14) erstreckt, wobei ein mittlerer Bereich des Torsionsstabs (18) mit einem diesen umgebenden, länglichen rohrförmigen Element (22) drehfest verbunden ist, dessen einer Endabschnitt eine mit einem Pendelarm (14) verbundene Lagerbuchse (16) koaxial umschließt und abstützt, dessen anderer Endabschnitt eine Lagerbuchse (16) koaxial umschließt und abstützt, die mit dem anderen, gegenüberliegenden Pendelarm (14) verbunden ist, wobei eine Gummibuchse auf der Außenseite jedes Endbereiches des rohrförmigen Elementes (22) montiert ist, und wobei das Torsionselement wiederum umgeben ist von und fest verbunden mit einer äußeren Buchsenhülse (28) ist, die ausgebildet ist, um in der Seite des Fahrzeugkörpers befestigt zu sein, **dadurch gekennzeichnet, dass** jede Gummihülse fest an dem rohrförmigen Element (22) angebracht ist um ein zweites Torsionselement (26) zu bilden und **dadurch**, dass zusätzliche Eingriffselemente (44, 48; 46, 50) an der Außenseite der Lagerbuchse (16) der Pendelarme (14) und an der Innenseite des, diesen umgebenden, Endabschnitts des rohrförmigen Elements (22), angeordnet sind, wobei diese Elemente ausgebildet sind, um eine vorbestimmte, begrenzte freie Drehbewegung der Lagerbuchse (16) relativ zum Endbereich des rohrförmigen Elements (22) zu erlauben und, die im Fall, dass diese freie Relativdrehbewegung überschritten wird, miteinander in Eingriff gebracht werden, um ein Überdrehen des Torsionsstabes (18) zu vermeiden.

2. Aufhängungssystem nach Anspruch 1, **dadurch gekennzeichnet, dass** die Eingriffselemente an einem Teil axiale Nuten (46, 50) aufweisen, und am anderen Teil Rippen (44, 48), die in diese Nuten eingreifen, wobei die Rippen (44, 48) eine geringere Breite als die Nuten (46, 50) aufweisen.

3. Aufhängungssystem nach Anspruch 1 oder 2, **dadurch gekennzeichnet, dass** der Torsionsstab (18) drehfest durch eine Keilwellenverbindung, mit dem mittleren Bereich des rohrförmigen Elements (22) verbunden ist.

4. Aufhängungssystem nach einem der Ansprüche 1-3, **dadurch gekennzeichnet, dass** jede äußere Buchsenhülse (28) von einer Stützhülse (30) mit einem Befestigungsflansch (32) gestützt wird, um die gesamte Stützrad-Aufhängung (10) an, zugeordneten Verankerungen (38) in den Seiten des Fahrzeugaufbaus zu befestigen.

5. Aufhängungssystem nach Anspruch 4, **dadurch gekennzeichnet, dass** jede äußere Buchsenhülse (28) mehrere axial ausgerichtete Zungen (34), für einen die Drehung verhindernden Verriegelungseingriff mit korrespondierenden Ausnehmungen (36) in der Verankerung (38), oder umgekehrt, aufweist.

6. Aufhängungssystem nach einem der Ansprüche 1-5, **dadurch gekennzeichnet, dass** die Lagerbuchsen (16) der Pendelarme (14) in den Endbereichen des rohrförmigen Elements (22) durch Gleitlager (24) befestigt sind.

7. Aufhängungssystem nach einem der Ansprüche 1-6, **dadurch gekennzeichnet, dass** die Gummibuchsen (26) fest auf die Endabschnitte des rohrförmigen Elements (22) und auf die äußeren Buchsenhülse (28) vulkanisiert sind.

8. Aufhängungssystem nach einem der Ansprüche 1-7, **dadurch gekennzeichnet, dass** die Gummibuchsen (26) für jedes Stützradpaar, und der Torsionsstab (18) derart dimensioniert sind, so dass jede ungefähr die Hälfte der relevanten Verdrehung aufnimmt.

9. Aufhängungssystem nach einem der Ansprüche 1-8, **dadurch gekennzeichnet, dass** die zwei Gummibuchsen (26) für jedes Stützradpaar ausgebildet sind, um an der entsprechenden Außenseite des Fahrzeugkörpers (40) angebracht zu werden.

## Revendications

1. Un système de suspension pour un véhicule à chenilles du type comportant des roues support (12) aménagées le long des côtés opposés du véhicule afin d'appuyer contre l'intérieur d'un entraînement à chenilles respectif sans fin, où les roues support (12) sont montées rotativement à une extrémité externe d'un bras pendulaire (14) respectif lequel, à son extrémité interne, est monté en pivotage limité dans le côté de la carrosserie du véhicule, et où les bras pendulaires (14) pour chaque paire de roues support opposées (12) sont interconnectés au moyen d'un premier élément de suspension (18) ayant la forme d'une barre de torsion laquelle s'étend au travers de l'étendue longitudinale du véhicule et coaxialement avec l'axe de pivotage des bras pendulaires (14), une portion centrale de la barre de torsion (18) étant connectée et entourée d'une manière rotationnelle fixe à un élément tubulaire (22) allongé, dont une portion d'extrémité entoure et supporte de manière coaxiale un manchon à palier (16) connecté à un bras pendulaire (14) et dont l'autre portion d'extrémité entoure et supporte de manière coaxiale un manchon à palier (16) connecté à l'autre bras pendulaire (14) opposé, un coussinet de caoutchouc étant monté sur l'extérieur de chaque portion d'extrémité de l'élément tubulaire (22) et dont l'élément de torsion est à son tour entouré et fermement connecté à un manchon à coussinet externe (28) conçu pour être fixé fermement dans le côté de la carrosserie du véhicule, **caractérisé en ce que** chaque coussinet en caoutchouc est monté fermement sur l'élément tubulaire (22) pour former un deuxième élément de torsion (26) et **en ce que** des pièces d'engrènement complémentaires (44, 48; 46, 50) sont aménagées à l'extérieur du manchon à palier (16) des bras pendulaires (14) et à l'intérieur de la portion d'extrémité de l'élément tubulaire (22) qui l'entoure, lesquelles pièces sont conçues pour permettre un mouvement de rotation libre limité, prédéterminé, du manchon à palier (16) par rapport à la portion d'extrémité de l'élément tubulaire (22) et, dans l'éventualité où ce mouvement de rotation libre relative devienne excédé, d'être amenées en engrènement les unes avec les autres pour prévenir le survrillage de la barre de torsion (18).

2. Un système de suspension selon la revendication 1, **caractérisé en ce que** les pièces d'engrènement comportent, dans une partie, des rainures axiales (46, 50) et, dans l'autre partie, des nervures (44, 48) s'engrenant dans ces rainures, les nervures (44, 48) ayant une largeur inférieure à celle des rainures (46, 50).

3. Un système de suspension selon la revendication 1 ou 2, **caractérisé en ce que** la barre de torsion (18) est connectée d'une manière rotationnelle fixe à la portion centrale de l'élément tubulaire (22) via un joint à cannelures.

4. Un système de suspension selon l'une quelconque des revendications 1-3, **caractérisé en ce que** chaque manchon à coussinet externe (28) est supporté par un manchon support (30) avec un plateau d'accouplement (32) pour fixer le montage entier de roues support (10) dans des étais associés (38) dans les côtés de la carrosserie du véhicule.

5. Un système de suspension selon la revendication 4, **caractérisé en ce que** chaque manchon à coussinet externe (28) a un certain nombre de languettes (34) dirigées de façon axiale, pour un engrènement de verrouillage prévenant la rotation, avec encoches correspondantes (36) dans l'étai (38) ou vice versa.

6. Un système de suspension selon l'une quelconque des revendications 1-5, **caractérisé en ce que** les manchons à paliers (16) des bras pendulaires (14) sont montés dans les portions d'extrémité de l'élément tubulaire (22) via des paliers lisses (24).

7. Un système de suspension selon l'une quelconque des revendications 1-6, **caractérisé en ce que** les coussinets en caoutchouc (26) sont fermement vulcanisés sur les portions d'extrémités de l'élément tubulaire (22) ainsi que dans les manchons externes (28).

8. Un système de suspension selon l'une quelconque des revendications 1-7, **caractérisé en ce que** les coussinets en caoutchouc (26) pour chaque paire de roues support ainsi que la barre de torsion (18) sont mesurés de façon à ce que chacun d'eux absorbe environ la moitié du vrillage applicable.

9. Un système de suspension selon l'une quelconque des revendications 1-8, **caractérisé en ce que** les deux coussinets en caoutchouc (26) pour chaque paire de roues support sont conçus pour être montés respectivement sur les côtés extérieurs de la carrosserie du véhicule (40).
